# FASCICULE DE BREVET EUROPEEN

(11) **EP 1 639 880 B1**
(45) Date de publication et mention de la délivrance du brevet: **21.05.2008**
(21) Numéro de dépôt: 05108149.5
(22) Date de dépôt: 06.09.2005
(51) Int. Cl.: A01D 78/10, A01B 73/02

(54) **Andaineuse de végétaux**
Schwader
Windrower

(30) Priorité: 23.09.2004 FR 0452142
(43) Date de publication de la demande: 29.03.2006
(73) Titulaire: KUHN S.A., 67700 Saverne (FR)
(72) Inventeur: Stutzmann, Olivier, 57370 Zilling (FR)
(74) Mandataire: Andres, Jean-Claude

(56) Documents cités:
- EP-A- 0 706 751
- EP-A- 1 060 651

## Description

La présente invention se rapporte à une machine de fenaison, notamment une andaineuse de végétaux fauchés, comportant un bâti avec trois roues râteleuses d'andainage, lesquelles roues râteleuses sont entraînées pendant le travail autour d'axes sensiblement verticaux et sont configurables dans une position d'encombrement minimal pour le transport ne dépassant pas les hauteurs et largeurs admises pour les déplacements sur les voies publiques.

Différentes andaineuses disposant de plusieurs roues râteleuses sont déjà connues et utilisées dans les exploitations agricoles, ces machines forment usuellement plusieurs andains, un par roue râteleuse, et disposent d'une largeur de travail directement fonction du nombre de roues râteleuses et du diamètre de celles-ci.

Des andaineuses comportant des roues râteleuses alignées perpendiculairement à la direction de déplacement sont connues au travers des documents EP 465 393 ou EP 1 142 468. Toutes ces machines proposent un repliement des roues râteleuses à la verticale, dans une position à 90° par rapport à celle de travail pour le transport de la machine. Cette configuration de transport peut conduire à une hauteur importante de la machine repliée et à un encombrement conséquent incompatible avec les voies routières à utiliser.

En effet, compte tenu des hauteurs et des largeurs admises sur ces voies publiques, un transport exceptionnel doit être organisé, ce qui nécessite un véhicule supplémentaire muni d'un gyrophare et du personnel à disposition. Ce type de déplacement coûteux doit être planifié, ce qui n'est pas toujours possible pour l'exploitant agricole, particulièrement s'il travaille seul.

Pour des raisons de productivité il est souhaitable par ailleurs de réaliser des andaineuses de grandes capacités qui permettent de rassembler le fourrage en un seul andain provenant d'une surface au sol la plus grande possible, soit donc une machine permettant un minimum de passages dans le champ, ces machines sont donc conçues avec des roues râteleuses de diamètres importants et en nombre aussi grand que cela est techniquement réalisable.

Ces andaineuses de grandes capacités posent donc des problèmes de transport pour les déplacer d'un espace de travail à un autre sur les voies publiques.

Comme cela a été cité précédemment il existe des andaineuses disposant de roues râteleuses alignées dans un plan perpendiculaire à l'avancement du tracteur, ces machines sont limitées en dimensions du fait des configurations de repliement réalisables, et du fait de leur conception qui ne permet pas de rassembler le fourrage en un seul andain important par passage.

En conséquence le compromis accessible entre la dimension de la machine, plus particulièrement la taille des roues râteleuses, avec la nécessité de transporter la machine aisément d'un site de travail à un autre, et avec le nombre d'andains déposés, est très défavorable pour les andaineuses de ce type.

Il a été imaginé des machines avec des roues râteleuses décalées à l'opposé du déplacement du tracteur pour collecter en un seul passage plusieurs zones et les rassembler en un seul andain. Cette manière de râteler le champ permet de diminuer le nombre de passages de la machine chargée de la collecte ultérieure du fourrage.

Un exemple d'une telle andaineuse avec des roues râteleuses décalées est décrit dans le document EP 1 290 936. Un autre exemple d'une andaineuse avec des roues râteleuses décalées est décrit dans le document EP 706 751. Cette andaineuse comporte deux roues râteleuses alignées perpendiculairement à la direction de déplacement et une troisième roue râteleuse disposée à l'arrière des deux roues râteleuses précitées et sensiblement à égales distances de celles-ci. Sur ces andaineuses, comme dans le cas des andaineuses avec des roues râteleuses en ligne décrit précédemment, il doit être trouvé un compromis entre la longueur admissible de la machine attelée à l'arrière du tracteur et le nombre de roues râteleuses qui peuvent être disposées de cette manière. Le problème de placer un nombre de roues râteleuses important sur la machine en disposant d'une configuration de transport aussi compacte que possible se pose toujours.

L'invention a donc pour objectif de remédier aux inconvénients des machines connues en proposant une andaineuse disposant d'une très grande largeur de travail et repliable pour être transportée au gabarit routier ne nécessitant aucune autorisation spécifique pour le déplacement d'un site de travail à un autre.

L'invention concerne une machine de fenaison, notamment une andaineuse de végétaux couchés sur le sol, comportant un bâti portant trois roues râteleuses disposant chacune de roues d'appui au sol et de fourches de râtelage et étant entraînées en rotation autour d'axes supports dans une position de travail, lesquelles roues râteleuses sont reliées par des bras porteurs au bâti et peuvent être placées dans une position de travail au sol dans laquelle les trois roues râteleuses sont sensiblement dans le même plan, laquelle machine de fenaison est caractérisée par le fait que les trois roues râteleuses peuvent être placées dans une position de transport dans laquelle les trois plans formés par les trois roues râteleuses sont différents et sensiblement perpendiculaires deux à deux.

Les avantages d'une machine de fenaison selon l'invention sont nombreux :
- une telle machine permet de travailler sur des largeurs importantes avec une grande manoeuvrabilité tout en râtelant en douceur.
- La compacité de la position repliée autorise le transport de la machine sur toutes les routes et chemins et facilite son remisage.
- Le repliement particulier de l'andaineuse en position de transport permet l'utilisation d'un ensemble remorqué de longueur réduite.
- Le passage entre la position de transport et la position de travail est rapide et réalisable depuis le tracteur.
- Le déplacement du fourrage en un seul andain de gros volume permet d'optimiser les passages dans les champs tant pour la mise en andains que pour la collecte ultérieure.

D'autres caractéristiques et avantages de l'invention se dégageront de la description qui va suivre en regard des dessins annexés qui ne sont donnés qu'à titre d'exemples non limitatifs.
La figure 1 est une vue de dessus d'une machine selon l'invention en position de travail.
La figure 2 est une vue de dessus d'une machine selon l'invention en position de transport.

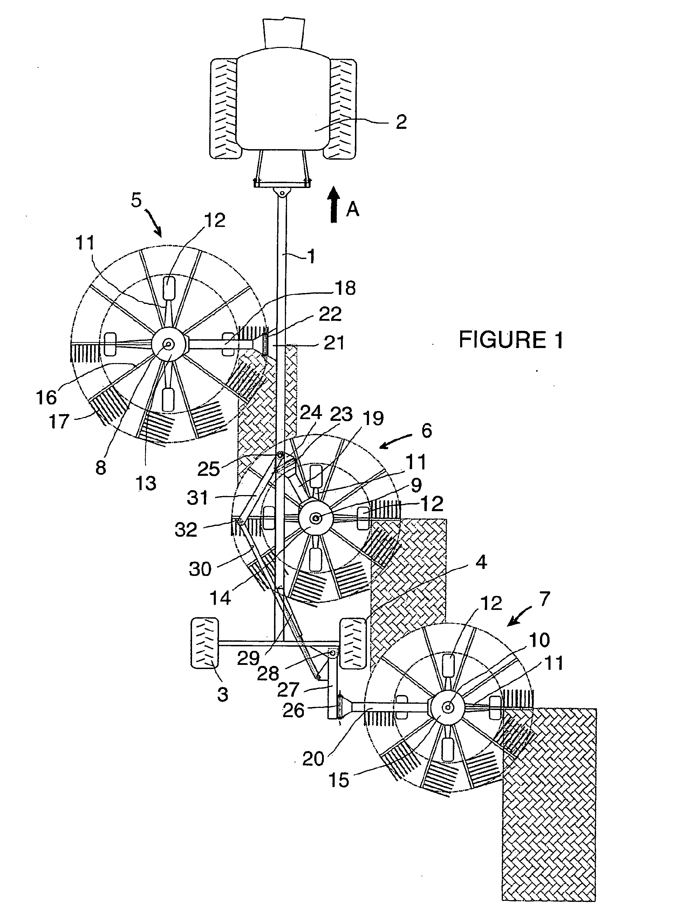

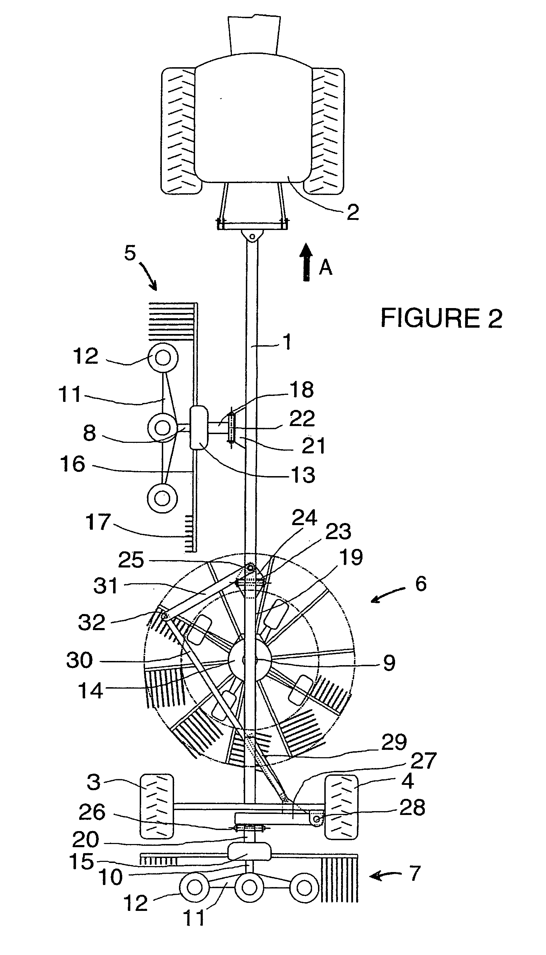

Telle qu'elle est représentée sur les figures 1 et 2, la machine selon l'invention comporte un bâti allongé 1 en forme de T inversé pouvant être accroché au moyen d'un dispositif d'accouplement à un tracteur 2 et s'appuyant sur le sol grâce à deux roues 3 et 4.

La machine est attelée à un tracteur qui la déplace dans le sens de la flèche A.

Le bâti 1 porte trois roues râteleuses 5, 6 et 7 montées rotatives autour d'axes 8, 9 et 10 sensiblement verticaux.

Les trois roues râteleuses 5, 6 et 7 sont de conception sensiblement identique et portent à l'extrémité inférieure des axes 8, 9 et 10 des supports 11 équipés de quatre roues porteuses 12 d'appui au sol. Ces supports sont réglables hydrauliquement en hauteur par rapport aux axes 8, 9 et 10 correspondants de manière à pouvoir modifier la distance de la roue râteleuse concernée par rapport au sol. Les quatre roues porteuses 12 d'appui au sol permettent aux roues râteleuses de bien épouser la surface de collecte conduisant ainsi à une efficacité maximale de la machine.

Chacune des roues râteleuses 5, 6 et 7 se compose essentiellement d'un carter central 13, 14, 15 monté sur un axe 8, 9, 10, correspondant au moyen de roulements à billes. Ce carter central 13, 14, 15 porte plusieurs bras 16 qui s'étendent dans un plan pratiquement horizontal lorsque la machine est en position de travail pour le râtelage.

Les bras 16 sont munis à leurs extrémités les plus éloignées dudit carter 13, 14, 15, de fourches de râtelage 17.

Chacun de ces bras 16 est monté dans un palier du carter central 13, 14, 15, de manière à pouvoir pivoter sur lui-même, c'est à dire autour de son axe géométrique longitudinal. Dans le carter central 13, 14, 15, se situe une came de commande qui est fixée sur l'axe 8, 9, 10 correspondant.

Chaque bras porte-fourche 16 possède à son extrémité située à l'intérieur du carter central 13, 14, 15, un galet qui coopère avec ladite came de commande.

Les roues râteleuses ici décrites sont connues et employées dans plusieurs machines telles que celles citées dans les documents EP 772 969 ou EP 1 142 468.

Au travail les trois roues râteleuses 5, 6, 7, reposent sur le sol, elles tournent toutes les trois dans le même sens, lequel sens est horaire dans la vue de dessus illustrée dans la figure 1, et coopèrent pour la formation d'un andain latéral de gros volume.

Selon l'invention les trois roues râteleuses 5, 6, 7, sont placées à l'extrémité de bras 18, 19, 20 permettant un positionnement en ligne, et en position décalée par rapport à l'avancement A du tracteur 2, de manière à couvrir une surface de travail maximale.

Lors du fonctionnement de la machine, la surface de râtelage de la deuxième roue râteleuse 6 se superpose partiellement avec celle de la première roue 5, et celle de la troisième roue 7 se superpose partiellement avec celle de la deuxième roue 6, tel que cela est illustré sur la figure 1, de manière à constituer un andain latéral de gros volume.

Selon l'invention les trois roues râteleuses 5, 6 et 7, en position de travail au sol, sont alignées et décalées dans la direction opposée à l'avancement du tracteur d'une valeur qui correspond sensiblement à leur diamètre. La largeur de travail développée est de l'ordre de 9 à 10 mètres selon le diamètre choisi pour les roues râteleuses 5, 6 ou 7.

Par rapport au bâti 1, et dans la vue de dessus représentée sur la figure 1, la première roue râteleuse 5 est située la plus près du tracteur, sur le côté gauche du bâti 1. La deuxième roue râteleuse 6 centrale est légèrement décalée sur le côté opposé du bâti 1 par rapport à la roue râteleuse 5 et la troisième roue râteleuse 7 est quant à elle sur le côté droit, à l'extrémité la plus éloignée du tracteur.

Selon cette configuration les fourrages rassemblés par la roue râteleuse 5 sont déposés sur la trajectoire de la roue râteleuse 6 qui couvre par ailleurs sa propre surface de collecte. L'ensemble de la collecte effectuée par les roues râteleuses 5 et 6 est ensuite récupérée par la roue râteleuse 7 qui réalise la dépose de l'andain latéralement par rapport au tracteur en une seule rangée de gros volume.

Selon l'invention la roue râteleuse 6 est légèrement décalée vers la droite par rapport à l'axe du bâti 1 de manière à ce que la roue 4 ne soit pas sur la trajectoire de l'andain de ladite roue râteleuse 6 et ne tasse pas le fourrage, ce qui aurait pour conséquence sa dégradation et une difficulté de collecte par la roue râteleuse 7.

Tel que cela est illustré sur la figure 1 la roue râteleuse 7 est décalée vers l'extérieur par rapport à la roue 4 supportant le bâti 1.

Dans l'invention les bras 18, 19, 20, sont reliés au bâti 1 selon différentes configurations.

Le bras 18, situé sur le côté gauche du bâti et à 90° par rapport à celui-ci lorsque l'andaineuse est en position de travail, est articulé sur un support 21 solidaire du bâti 1 à l'aide d'un axe 22 sensiblement horizontal et dirigé dans la direction d'avancement A.

Le bras 19, porteur de la roue râteleuse 6, est articulé au moyen d'un axe 23 sensiblement horizontal sur un support 24. Ledit support 24 est lui-même articulé au moyen d'un axe 25 sensiblement vertical sur le bâti 1.

Le bras 20, porteur de la roue râteleuse 7, est articulé au moyen d'un axe 26 sensiblement horizontal sur un deuxième bras 27 qui est articulé sur le bâti 1 à l'aide d'un axe 28 sensiblement vertical.

Ce deuxième bras 27 est déplaçable autour de l'axe 28 sensiblement vertical au moyen d'un vérin hydraulique 29. Le bras 27 est en outre relié à travers une tringle 30 à un levier 31 qui est solidaire du support 24 du bras 19 supportant la seconde roue râteleuse 6.

La tringle 30 et le levier 31 sont articulés autour d'un axe sensiblement vertical 32, ce dispositif de tringlerie permet un mouvement coordonné entre les bras 19 et 20 lors du déplacement des roues râteleuses dans la position de transport ou dans la position de travail.

La position de transport illustrée sur la figure 2 montre le repliement original des trois roues râteleuses selon l'invention autour du bâti 1 dans une configuration d'encombrement minimal.

Pour le transport de l'andaineuse les bras porteurs 18 et 20 sont relevés par pivotement à 90° autour des axes 22 et 26, au moyen de vérins hydrauliques non représentés sur les figures 1 et 2, dans une position sensiblement verticale.

La roue râteleuse 5 est pivotée à 90° autour de l'axe 22 pour dégager les fourches 17 du sol et aboutir à la configuration de transport.

La deuxième roue râteleuse 6 est légèrement soulevée autour de l'articulation 23 pour être dégagée du sol, elle est en outre déplacée autour de l'axe d'articulation 25 sensiblement vertical pour être centrée par rapport au bâti 1. Ce déplacement est combiné avec le déplacement décrit ci-après de la roue râteleuse 7.

La troisième roue râteleuse 7 est relevée à la verticale autour de l'axe d'articulation 26 et est repliée à l'aide du deuxième bras 27 d'environ 90° vers le bâti 1 autour de l'axe 28. Ce repliement est assuré au moyen du vérin hydraulique 29. Simultanément la tringle 30 actionne le levier 31 de telle sorte que celui-ci déplace la deuxième roue râteleuse 6 dans la position décrite ci-dessus.

Ainsi dans l'andaineuse en position de transport la roue râteleuse 5 est située dans un plan vertical parallèle à celui du grand axe du bâti 1, la roue râteleuse 6 est dans un plan horizontal parallèle à celui du plan de travail et la roue râteleuse 7 est dans un plan vertical perpendiculaire à celui du grand axe du bâti 1 et à la direction d'avancement A du tracteur 2.

Selon l'invention le passage de la position de travail à la position de transport, et l'opération inverse, sont commandés depuis le tracteur et réalisés de manière automatique au moyen de vérins hydrauliques connectés sur l'hydraulique du tracteur.

De préférence selon l'invention il est envisagé des dispositifs de verrouillage des roues râteleuses dans leur position de transport pour éviter tout risque d'accident, de tels moyens de sécurité sont connus dans le domaine.

Les dimensions des roues râteleuses peuvent être variables et il peut être imaginé de réaliser une roue râteleuse 5 de plus grand diamètre que les autres, voire même trois roues de diamètres différents, sans sortir du cadre de l'invention, de manière que la machine développe une surface de travail la plus importante possible.

Les diamètres des roues râteleuses 6 et 7 sont limités par l'encombrement de la machine pour le transport routier. Typiquement ces roues peuvent être identiques et inférieures à 3 mètres de diamètre ou être configurées pour que leur diamètre corresponde à la largeur maximum autorisée pour un transport au gabarit routier standard. Les roues râteleuses 5, 6 et 7 peuvent aussi être équipées de bras 16 partiellement démontables ou repliables pour réduire davantage leurs dimensions au transport

Après déplacement des trois roues râteleuses 5, 6 et 7 dans la position de transport la largeur, la hauteur ainsi que la longueur de la machine sont réduites et les déplacements sur les routes et chemins possibles aisément. L'encombrement limité dans les trois dimensions facilite également le remisage de la machine chez l'exploitant agricole.

Plusieurs variantes sont possibles sans sortir du cadre de l'invention, il peut notamment être envisagé d'implanter un déflecteur d'andainage s'étendant latéralement par rapport à la roue râteleuse 7. Ce déflecteur peut être réalisé sous forme de grille ou de toile dirigée dans la direction d'avancement A.

Différentes configurations de raccordement de la machine de fenaison au tracteur sont envisageables, le bâti peut être plus ou moins allongé et les différents organes décrits de dimensions variables, les roues râteleuses peuvent contenir un nombre de bras et de fourches plus ou moins important et être actionnées de diverses manières, sans sortir du cadre de l'invention telle que définie par les revendications.

## Revendications

1. Machine de fenaison, notamment une andaineuse de végétaux couchés sur le sol, comportant un bâti (1) portant trois roues râteleuses (5) (6) (7) disposant chacune de roues d'appui au sol (12) et de fourches de râtelage (17), et étant entraînées en rotation autour d'axes supports (8) (9) (10) dans une position de travail, lesquelles roues râteleuses sont reliées par des bras porteurs (18) (19) (20) (27) au bâti (1) et peuvent être placées dans une position de travail au sol dans laquelle les trois roues râteleuses (5) (6) (7) sont sensiblement dans le même plan, laquelle machine de fenaison est ***caractérisée par le fait* que** les trois roues râteleuses (5) (6) (7) peuvent être placées dans une position de transport dans laquelle les trois plans formés par les trois roues râteleuses (5) (6) (7) sont différents et sensiblement perpendiculaires deux à deux.

2. Machine selon la revendication 1, ***caractérisée par le fait* qu'**en position de transport la première roue râteleuse (5) est située dans un plan vertical parallèle à celui du grand axe du bâti (1), la deuxième roue râteleuse (6) est dans un plan horizontal parallèle à celui du plan de travail et la troisième roue râteleuse (7) est dans un plan vertical perpendiculaire à celui du grand axe du bâti (1) et à la direction d'avancement (A) du tracteur (2).

3. Machine selon la revendication 1, ***caractérisée par le fait* que** le bras porteur (18) de la première roue râteleuse (5) et le bras porteur (19) de la deuxième roue râteleuse (6) sont articulés sur le bâti (1) de manière à pouvoir pivoter autour d'axes d'articulation (22) et (23) sensiblement horizontaux, et **par le fait que** le bras porteur (20) de la troisième roue râteleuse (7) peut pivoter autour d'un axe sensiblement horizontal (26) et est relié à un deuxième bras (27) qui est articulé sur le bâti (1) et déplaçable autour d'un axe (28) sensiblement vertical.

4. Machine selon la revendication 1, ***caractérisée par le fait* que** pour placer la deuxième roue râteleuse (6) et la troisième roue râteleuse (7) en position de transport, leurs bras porteurs (19), (20) et (27) ont un déplacement coordonné par l'intermédiaire d'une tringle (30) solidaire du deuxième bras (27) portant la troisième roue râteleuse (7) et d'un levier (31) solidaire du support (24) du bras (19) supportant la deuxième roue râteleuse (6), lequel levier (31) et laquelle tringle (30) sont reliés entre eux autour d'un axe sensiblement vertical (32).

5. Machine selon la revendication 1, ***caractérisée par le fait* que** la deuxième roue râteleuse (6), en position de travail, est légèrement décalée latéralement par rapport à l'axe du bâti (1), par pivotement de son bras porteur (19) autour d'un axe d'articulation (25) sensiblement vertical.

6. Machine selon l'une quelconque des revendications précédentes, ***caractérisée par le fait* que** les trois roues râteleuses (5) (6) (7) sont sensiblement alignées en position de travail et décalées dans la direction opposée à l'avancement (A) du tracteur (2) d'une valeur qui correspond sensiblement à leur diamètre.

7. Machine selon la revendication 1, ***caractérisée par le fait* que** le passage de la position de travail à la position de transport, ou le passage inverse, est commandé depuis le tracteur (2).

8. Machine selon l'une quelconque des revendications précédentes, ***caractérisée par le fait* qu'**au moins une des trois roues râteleuses (5), (6) ou (7) est de dimensions différentes de celles des autres.

9. Machine selon la revendication 8, ***caractérisée par le fait* que** la première roue râteleuse (5) a un plus grand diamètre que les autres roues râteleuses (6) et (7) et que ces roues râteleuses (6) et (7) ont des diamètres identiques, lesquels diamètres correspondent sensiblement à la largeur maximum autorisée pour un transport au gabarit routier standard.

10. Machine selon l'une quelconque des revendications 1 à 7, ***caractérisée par le fait* que** les trois roues râteleuses (5) (6) (7) sont identiques.

## Claims

1. Haymaking machine, particularly a windrower for plant matter lying on the ground, comprising a frame (1) bearing three raking wheels (5) (6) (7) each having soil resting wheels (12) and raking forks (17) and being driven in rotation about support axes (8) (9) (10) in a work position, which raking wheels are connected by carrying arms (18) (19) (20) (27) to the frame (1) and can be placed in a work position on the ground in which position the three raking wheels (5) (6) (7) are substantially in the same plane, which haymaking machine is ***characterized in* that** the three raking wheels (5) (6) (7) can be placed in a transport position in which the three planes formed by the three raking wheels (5) (6) (7) are different and substantially perpendicular two by two.

2. Machine according to claim 1, ***characterized in* that**, in the transport position, the first raking wheel (5) is situated in a vertical plane parallel to that of the major axis of the frame (1), the second raking wheel (6) is in a horizontal plane parallel to that of the plane of work and the third raking wheel (7) is in a vertical plane perpendicular to that of the major axis of the frame (1) and to the direction of forward travel (A) of the tractor (2).

3. Machine according to claim 1, ***characterized in* that** the carrying arm (18) of the first raking wheel (5) and the carrying arm (19) of the second raking wheel (6) are articulated to the frame (1) in such a way as to be able to pivot about substantially horizontal articulation axes (22) and (23) and ***in* that** the carrying arm (20) of the third raking wheel (7) can pivot about a substantially horizontal axis (26) and is connected to a second arm (27) which is articulated to the frame (1) and can move about a substantially vertical axis (28).

4. Machine according to claim 1, ***characterized in* that**, in order to place the second raking wheel (6) and the third raking wheel (7) in the transport position, their carrying arms (19), (20) and (27) have a movement that is coordinated by way of a rod (30) secured to the second arm (27) bearing the third raking wheel (7), and of a lever (31) secured to the support (24) of the arm (19) supporting the second raking wheel (6), which lever (31) and which rod (30) are connected to one another about a substantially vertical axis (32).

5. Machine according to claim 1, ***characterized in* that** the second raking wheel (6), in the work position, is slightly laterally offset with respect to the axis of the frame (1), through pivoting its carrying arm (19) about a substantially vertical articulation axis (25).

6. Machine according to any one of the preceding claims, ***characterized in* that** the three raking wheels (5) (6) (7) are substantially aligned in the work position and are offset in the opposite direction to the direction of forward travel (A) of the tractor (2) by a value that substantially corresponds to their diameter.

7. Machine according to claim 1, ***characterized in* that** the switch from the work position to the transport position, or vice versa, is performed from the tractor (2).

8. Machine according to any one of the preceding claims 1, ***characterized in* that** at least one of the three raking wheels (5), (6) or (7) is of different dimensions from the others.

9. Machine according to claim 8, ***characterized in* that** the first raking wheel (5) has a larger diameter than the other raking wheels (6) and (7) and ***in* that** these raking wheels (6) and (7) have identical diameters, which diameters correspond substantially to the maximum width allowed for transport at the standard road-going track width.

10. Machine according to any one of the preceding claims, ***characterized in* that** the three raking wheels (5) (6) (7) are identical.

## Patentansprüche

1. Heuwerbungsmaschine, insbesondere einen Schwader für am Boden liegende Pflanzen mit einem Rahmen (1), der drei Rechräder (5) (6) (7) trägt, die jeweils über Abstützungsräder (12) am Boden und Rechgabeln (17) verfügen und in Drehung um Stützachsen (8) (9) (10) in einer Arbeitsposition angetrieben werden, wobei die Rechräder durch Tragarme (18) (19) (20) (27) mit dem Rahmen (1) verbunden sind und in einer Arbeitsposition am Boden angeordnet werden können, in der die drei Harkenräder (5, 6, 7) im Wesentlichen in derselben Ebene sind, wobei die Heuwerbungsmaschine ***dadurch gekennzeichnet ist,* dass** die drei Rechräder (5) (6) (7) in einer Transportposition angeordnet werden können, in der die drei von den drei Rechrädem (5) (6) (7) gebildeten Ebenen unterschiedlich und im Wesentlichen zwei zu zwei senkrecht sind.

2. Maschine nach Anspruch 1, ***dadurch gekennzeichnet,* dass** in Transportposition das erste Rechrad (5) in einer Vertikalebene parallel zu jener der großen Achse des Rahmens (1) angeordnet ist, das zweite Rechrad (6) in einer Horizontalebene parallel zu jener der Arbeitsebene ist, und das dritte Rechrad (7) in einer Vertikalebene senkrecht auf jene der großen Achse des Rahmens (1) und zur Vorschubrichtung (A) des Traktors (2) ist.

3. Maschine nach Anspruch 1, ***dadurch gekennzeichnet,* dass** der Tragarm (18) des ersten Rechrades (5) und der Tragarm (19) des zweiten Rechrades (6) auf dem Rahmen (1) angelenkt sind, um um im Wesentlichen horizontale Gelenkachsen (22) und (23) schwenken zu können, ***und dadurch,*** dass der Tragarm (20) des dritten Rechrades (7) um eine im Wesentlichen horizontale Achse (26) schwenken kann und mit einem zweiten Arm (27) verbunden ist, der auf dem Rahmen (1) angelenkt und um eine im Wesentlichen vertikale Achse (28) verschiebbar ist.

4. Maschine nach Anspruch 1, ***dadurch gekennzeichnet,* dass**, um das zweite Rechrad (6) und das dritte Rechrad (7) in Transportposition anzuordnen, ihre Tragarme (19), (20) und (27) eine koordinierte Verschiebung mittels einer Stange (30) erfahren, die mit dem zweiten Arm (27), der das dritte Rechrad (7) trägt, und einem Hebel (31) verbunden ist, der fest mit der Stütze (24) des Arms (19) verbunden ist, der das zweite Rechrad (6) trägt, wobei der Hebel (31) und die Stange (30) miteinander um eine im Wesentlichen vertikale Achse (32) verbunden sind.

5. Maschine nach Anspruch 1, ***dadurch gekennzeichnet,* dass** das zweite Rechrad (6) in Arbeitsposition leicht seitlich zur Achse des Rahmens (1) durch Schwenken seines Tragarms (19) um eine im Wesentlichen vertikale Gelenkachse (25) versetzt ist.

6. Maschine nach irgend einem der vorhergehenden Ansprüche, ***dadurch gekennzeichnet,* dass** die drei Rechräder (5) (6) (7) im Wesentlichen in Arbeitsposition ausgerichtet und in die zur Vorwärtsbewegung (A) des Traktors (2) entgegen gesetzte Richtung um einen Wert versetzt sind, der im Wesentlichen ihrem Durchmesser entspricht.

7. Maschine nach Anspruch 1, ***dadurch gekennzeichnet,* dass** der Übergang von der Arbeitsposition in die Transportposition oder umgekehrt vom Traktor (2) aus gesteuert wird.

8. Maschine nach irgend einem der vorhergehenden Ansprüche, ***dadurch gekennzeichnet,* dass** mindestens eines der Rechräder (5), (6) oder (7) andere Dimensionen zu jenen der anderen hat.

9. Maschine nach Anspruch 8, ***dadurch gekennzeichnet,* dass** das erste Rechrad (5) einen größeren Durchmesser als die anderen Rechräder (6) und (7) hat, und dass diese Rechräder (6) und (7) identische Durchmesser haben, wobei die Durchmesser im Wesentlichen der maximal zulässigen Breite für einen Transport in Übereinstimmung mit den Standardstraßenmaßen entsprechen.

10. Maschine nach irgend einem der Ansprüche 1 bis 7, ***dadurch gekennzeichnet,* dass** die drei Rechräder (5) (6) (7) identisch sind.
